(19) Europäisches Patentamt
European Patent Office
Office européen des brevets

(11) **EP 3 438 604 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **17184994.6**

(22) Anmeldetag: **04.08.2017**

(51) Internationale Patentklassifikation (IPC):
**G01B 11/26** (2006.01)     **G06T 7/70** (2017.01)
**G06V 10/42** (2022.01)     **G06V 20/64** (2022.01)

(52) Gemeinsame Patentklassifikation (CPC):
**G01B 11/002; G01B 11/26; G06T 7/70; G06V 10/421; G06V 20/64**

(54) **VERFAHREN ZUM ERMITTELN EINER LAGE EINES ZUMINDEST ABSCHNITTSWEISE LINIENFÖRMIGEN OBJEKTS UND AUTOKOLLIMATOR**

METHOD FOR DETERMINING A POSITION OF AN AT LEAST PARTIALLY LINEAR OBJECT AND AUTOCOLLIMATOR

PROCÉDÉ DE DÉTECTION D'UNE POSITION D'UN OBJET DE FORME AU MOINS PARTIELLEMENT LINÉAIRE  ET AUTOCOLLIMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.02.2019   Patentblatt 2019/06**

(73) Patentinhaber: **Bundesrepublik Deutschland, vertreten durch das Bundesmisterium für Wirtschaft und Energie, endvertreten durch den Präsidenten der PTB 38116 Braunschweig (DE)**

(72) Erfinder:
• **Schumann, Matthias 38104 Braunschweig (DE)**
• **Geckeler, Ralf Dieter 38116 Braunschweig (DE)**

(74) Vertreter: **Gramm, Lins & Partner Patent- und Rechtsanwälte PartGmbB Frankfurter Straße 3 C 38122 Braunschweig (DE)**

(56) Entgegenhaltungen:
**CN-A- 102 901 459     JP-A- 2003 166 815 JP-A- 2009 014 388**

• **BERGUES GUILLERMO ET AL: "External visual interface for a Nikon 6D autocollimator", 2014 IEEE INTERNATIONAL INSTRUMENTATION AND MEASUREMENT TECHNOLOGY CONFERENCE (I2MTC) PROCEEDINGS, IEEE, 12. Mai 2014 (2014-05-12), Seiten 35-39, XP032620797, DOI: 10.1109/I2MTC.2014.6860518 [gefunden am 2014-07-18]**
• **GECKELER R D ET AL: "Autocollimators for deflectometry: Current status and future progress", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 616, Nr. 2-3, 1. Mai 2010 (2010-05-01) , Seiten 140-146, XP027009568, ISSN: 0168-9002 [gefunden am 2009-11-12]**

EP 3 438 604 B1

**Beschreibung**

Die Erfindung betrifft ein Verfahren zum Ermitteln einer Lage eines zumindest abschnittsweise linienförmigen Objekts mit den Merkmalen von Anspruch 1.

Gemäß einem zweiten Aspekt betrifft die Erfindung einen Autokollimator gemäß dem Oberbegriff von Anspruch 7.

Die Ermittlung der Lage zumindest abschnittsweise linienförmiger Objekte ist beispielsweise beim Betreiben von Autokollimatoren relevant. In diesem Fall ist das zumindest abschnittsweise linienförmige Objekt ein Teil einer Lichtquelle. Bewegt sich die Objektaufnahme, im vorliegenden Beispiel also der bewegliche Teil des Autokollimators, so bewegt sich das Messobjekt, das auch als Messmarkenbild bezeichnet werden könnte, auf dem Detektorelement. Die Positionsveränderung muss mit möglichst hoher Genauigkeit bestimmt werden, damit eine möglichst geringe Messunsicherheit erzielt werden kann. Ein zweites Beispiel für die Ermittlung einer Lage eines zumindest abschnittsweise linienförmigen Objekts ist die Positionsermittlung von Bauteilen auf einem Förderer, beispielsweise einem Bandförderer. Auch in diesem Fall ist eine möglichst hohe Genauigkeit bei der Bestimmung der Lage des Objekts wünschenswert.

Das linienförmige Objekt kann auch ein Muster sein, beispielsweise ein Interferogramm, ein Beugungsbild bei einer Lichtbeugung an einem Einzelspalt, eine Messmarke, ein Fadenkreuz oder eine Strichmarke.

Die Veröffentlichung "External visual interface for a Nikon 6D autocollimator" von Bergues et al. (DOI: 10.1109/I2MTC.2014.6860518) betrifft ein Auswertungsverfahren für einen Autokollimator mittels einer Digitalkamera. Dabei wird die Verschiebung eines Fadenkreuzes in einem parallel zu den Linien des Fadenkreuzes verlaufenden Koordinatensystem bestimmt.

Die Offenlegungsschrift JP 2003/166815 A betrifft ein Verfahren zum Bestimmen der dreidimensionalen Form eines Gegenstands, insbesondere nach einem Walzvorgang. Das zu vermessende gewalzte Bauteil wird entlang einer Förderrichtung gefördert und weist eine dazu senkrecht verlaufende Breitenrichtung auf. Parallel zu dieser Breitenrichtung wird nun beispielsweise ein originär punktförmiger Laserlichtstrahl aufgeweitet, sodass ein parallel zu der Breitenrichtung verlaufender schmaler Lichtstrahl gebildet wird, der auf den Gegenstand gestrahlt wird. Mittels einer Spezialkamera wird anhand des reflektierten Lichts die dreidimensionale Struktur des Gegenstands bestimmt.

Der Erfindung liegt die Aufgabe zugrunde, das Ermitteln der Lage eines zumindest abschnittsweise linienförmigen Objekts zu verbessern.

Die Erfindung löst das Problem durch ein gattungsgemäßes Verfahren, bei dem für den Orientierungswinkel $\alpha$ die Formel

$$\alpha = \arctan\left(\frac{n_y d_y}{n_x d_x}\right) \pm \varepsilon$$

gilt, wobei $n_x < N_x$ und $n_y < N_y$ natürliche, teilerfremde Zahlen sind und wobei $\varepsilon < 10$ Bogenminuten, vorzugsweise $\varepsilon < 7$ Bogenminuten, insbesondere $\varepsilon < 3$ Bogenminuten, gilt, wobei eine Differenz zwischen $n_x$ und $n_y$ betragsmäßig höchstens 50 beträgt, wobei das Verfahren zudem die Schritte eines Bestimmens einer Position, insbesondere eines Schwerpunkts, des Messobjekts für jede relevante Pixellinie, wobei die Pixellinie eine Zeile oder eine Spalte ist und eine relevante Pixellinie eine Pixellinie ist, die das Messobjekt schneidet, umfasst, wobei die so erhaltenen Lagen über $n_{Px}$ Pixellinien gemittelt werden, sodass $N_{Bl}$ Blockmittel-Lagen erhalten werden und wobei die Lage des Messobjekts aus, insbesondere allen, Blockmittel-Lagen bestimmt wird. Vorteilhaft an dem Verfahren ist, dass die Lage des Messobjekts mit besonders geringer Messunsicherheit erfasst werden kann. Der Grund dafür ist, dass Pixeleffekte zum großen Teil eliminiert werden können. Die Licht-Intensitätsverteilung des Messobjekts, das auch als Messmarkenbild bezeichnet werden könnte, wird von einem CCD-Detektorelement unvollständig gemessen, da sie durch Pixel approximiert und damit verfälscht wird. Aus der gemessenen Licht-Intensitätsverteilung wird auf die Position der Intensitätsverteilung geschlossen, die damit ebenfalls verfälscht ist. Die Position von Strukturen mit Subpixel-Ausdehnung kann beispielsweise nur mit zusätzlichen Kenntnissen innerhalb eines Pixels bestimmt werden. Die aber liegen in der Regel nicht vor. Die Verfälschung durch die Pixelstruktur des Detektorelements führt zu einer systematischen Abweichung der bestimmten Position einer Lichtintensitätsverteilung gegenüber der tatsächlichen Position. Diese Abweichung wird Pixeleffekt genannt. Durch die erfindungsgemäße Lehre können Pixeleffekte ohne zusätzliche Kenntnisse theoretisch quasi vollständig ausgeglichen werden.

Vorteilhaft ist zudem, dass das erfindungsgemäße Verfahren ohne neuartige Bauteile auskommt und so mit geringem Arbeitsaufwand bereits bestehende Vorrichtungen umgerüstet werden können.

Im Rahmen der folgenden Beschreibung wird unter dem Objekt ein realer Gegenstand verstanden wird, dessen Position ermittelt werden soll. Unter dem Messobjekt hingegen wird das Bild des Objekts auf dem Detektorelement verstanden. Aus der Lage des Messobjekts auf dem Detektorelement wird dann auf die Lage des Objekts geschlossen.

Unter einem zumindest abschnittsweise linienförmigen Objekt wird ein Objekt verstanden, das zumindest eine Kante hat, die durch eine Strecke beschrieben werden kann. Selbstverständlich kann prinzipiell jedes Objekt als Strecke beschrieben werden, solange ein beliebig großer Fehler, der durch diese Beschreibung verursacht wird, akzeptiert wird. Das aber ist nicht gemeint. Maßgeblich ist, dass durch die Beschreibung des Objekts als Linie höchstens eine zusätzliche Messunsicherheit bedingt wird, die höchstens das 0,8-fache der gesamten Messunsicherheit ausmacht. Insbesondere kann statt des Begriffs eines zumindest abschnittsweise linienförmigen Objekts der Begriff eines zunächst abschnittsweise quasieindimensionalen Objekts verwendet werden. Es sei darauf hingewiesen, dass es ausreichend ist, dass ein Teil des Messobjekts als linienförmig beschrieben werden kann. Beispielsweise ist auch ein gleichseitiges Dreieck in diesem Sinn ein abschnittsweise linienförmiges Objekt.

Vorzugsweise werden nur solche Pixellinien verwendet, deren Pixel innerhalb eines Auswertebereichs liegen, wobei das Objekt im Auswertebereich linienförmig ist. Insbesondere wird ein solches Objekt verwendet, für das eine Abweichung der Kanten des Messobjekts von einer (ideal geraden) Strecke im Auswertebereich höchstens einen Pixel, vorzugsweise höchstens ein halbes Pixel beträgt.

Unter dem Merkmal, dass eine Lage des Objekts beschrieben wird, wird insbesondere verstanden, dass die Lage relativ zu einer Ausgangs-Lage bestimmt wird. In anderen Worten ist das Bestimmen der Lage äquivalent zu dem Bestimmen einer Lageänderung.

Dass mehr Zeilen als Spalten existieren, soll lediglich die Benennung von Spalten und Zeilen vereinfachen. In anderen Worten bleibt ein Detektorelement gemäß Anspruch 1 ein solches Detektorelement, auch wenn es um 90° gedreht wird.

Unter einer relevanten Pixellinie wird eine Pixellinie verstanden, die das Messobjekt schneidet.

Günstig ist es, wenn die Detektorpixel quadratisch sind, das ist aber nicht notwendig. Wenn sie quadratisch sind, entspricht der Abstand $d_y$ zweier Zeilen vorzugsweise dem Abstand $d_x$ zweier Spalten. Insbesondere gilt $d_x = d_y \pm 5\ \%$.

Beträgt eine Differenz zwischen $n_x$ und $n_y$ erfindungsgemäß betragsmäßig höchstens 50, insbesondere höchstens 10 ist eine besonders geringe Messunsicherheit erreichbar.

Günstig ist es, wenn $n_x$ höchstens $N_x/10$ beträgt. Anderenfalls ist der Bereich der Lagen, die erfasst werden können, vergleichsweise klein. Alternativ oder zusätzlich beträgt $n_y$ höchstens $N_y/10$.

Günstig ist es, wenn die Zahlen $n_{Px}$ der Positionen, über die gemittelt wird, zumindest 5, insbesondere zumindest 20, beträgt. Je größer die Zahl der Pixellinien $n_{Px}$ ist, über die gemittelt wird, desto genauer kann die Lage ermittelt werden. Für praktische Anwendungen wird in der Regel ein Kompromiss zwischen einer möglichst geringen Messunsicherheit einerseits und einem großen Bereich an vermessbaren Positionen andererseits angestrebt.

Gemäß einer bevorzugten Ausführungsform bewegt sich das Messobjekt so relativ zum Detektorelement, dass es sich stets innerhalb eines rechteckigen Detektionsbereichs befindet, wobei der Detektionsbereich $N_{x,D}$ Detektionsbereichs-Zeilen und $N_{y,D}$ Detektionsbereichs-Spalten hat und wobei $N_x$ ein echter Teiler von $N_{x,D}$ ist und $N_y$ ein Teiler von $N_{y,D}$ ist. In anderen Worten wird das Detektorelement oder eine Lage-Erfassungsvorrichtung, die das Detektorelement enthält, so ausgerichtet, dass das Objekt sich nur auf eine Art und Weise bewegen kann, dass das Messobjekt die genannte Anforderung erfüllt.

Günstig ist es, wenn die Pixellinie eine Spalte und $n_{Px} = n_x$ ist, wenn $n_x > n_y$ gilt und dass die Pixellinie eine Zeile und $n_{Px} = n_y$ ist, wenn $n_x < n_y$ gilt. So wird erreicht, dass stets über eine möglichst große Anzahl an Pixellinien gemittelt wird, was zu einer geringen Messunsicherheit führt.

Vorzugsweise umfasst das Verfahren die Schritte (i) Anordnen eines zweiten Objekts, sodass auf dem Detektorelement ein zweites Messobjekt abgebildet wird, das sich quer zum ersten Messobjekt erstreckt, (ii) für jede relevante Pixelquerlinie, die quer zu den Pixellinien verläuft, Bestimmen einer Position, insbesondere eines Schwerpunkts, des zweiten Messobjekts, (iii) Mitteln der so erhaltenen Positionen über $N_{PL}$, zwei Pixelquerlinien, sodass Zweitblockmittel-Lagen erhalten werden und (iv) Bestimmen der Lage des Messobjekts aus, insbesondere allen, Blockmittel-Lagen und, insbesondere allen, Zweitblockmittel-Lagen. Es ist prinzipiell nicht möglich, eine Verschiebung des Messobjekts und damit des Objekts in eine Richtung entlang dessen linienförmiger Erstreckung zu bestimmen. In Richtung quer, insbesondere senkrecht, dazu hingegen ergibt sich bei einer solchen Verschiebung die geringstmögliche Messunsicherheit. Durch das Anordnen von zwei Objekten, sodass zwei zueinander quer verlaufende Messobjekte entstehen, wird damit erreicht, dass jegliche Verschiebung der beiden Objekte mit höchstmöglicher Genauigkeit erfasst werden kann. Günstig ist es, wenn die beiden Objekte an ein und demselben Gegenstand ausgebildet sind. Beispielsweise bilden die beiden Objekte ein Fadenkreuz auf einem Gegenstand, dessen Lage zu vermessen ist.

Unter einer Pixelquerlinie wird eine Linie verstanden, die quer zu einer Pixellinie verläuft. Ist beispielsweise die Pixellinie eine Zeile, so ist die Pixelquerlinie eine Spalte. Ist hingegen die Pixellinie eine Spalte, so ist die Pixelquerlinie eine Zeile.

Eine erfindungsgemäße Vorrichtung ist ein Autokollimator nach Anspruch 7 und weist eine Lichtquelle zum Aussenden eines Lichtstrahls und einen Reflektor zum Reflektieren des Lichtstrahls auf, wobei die Lichtquelle und der Reflektor so ausgebildet sind, dass der vom Reflektor reflektierte Lichtstrahl auf das Detektorelement fällt und dort das Messobjekt bildet. Auf diese Weise kann der Autokollimator mit einer besonders geringen Messunsicherheit betrieben werden.

Erfindungsgemäß ist ein Autokollimator mit (a) einer Lichtquelle zum Erzeugen einer Messmarke, (b) einem Spiegel und (c) einem Detektorelement, das in $N_x$ Zeilen und $N_y$ Spalten angeordnete Detektorpixel aufweist, wobei $N_x \geq N_y$ gilt, wobei sich die Zeilen in eine Zeilenrichtung erstrecken, wobei zwei benachbarte Zeilen einen Zeilenabstand haben, wobei sich die Spalten in eine quer, insbesondere senkrecht, zur Zeilenrichtung verlaufende Spaltenrichtung erstrecken und wobei zwei benachbarte Spalten einen Spaltenabstand haben, (d) wobei die Lichtquelle und der Spiegel so angeordnet sind, dass die Messmarke auf dem Detektorelement als Messobjekt abgebildet wird, (e) wobei sich das Messobjekt unter einem Orientierungswinkel relativ zur Zeilenrichtung auf dem Detektorelement erstreckt, (f) einer Auswerteeinheit, die mit dem Detektorelement verbunden ist, wobei (g) für den Orientierungswinkel die Formel

$$\alpha = \arctan\left(\frac{n_y d_y}{n_x d_x}\right) \pm \varepsilon$$

gilt, wobei $n_x < N_x$ und $n_y < N_y$ natürliche, teilerfremde Zahlen sind und wobei $\varepsilon < 10$ Bogenminuten, vorzugsweise $\varepsilon < 7$ Bogenminuten, insbesondere $\varepsilon < 3$ Bogenminuten gilt, und eine Differenz zwischen $n_x$ und $n_y$ betragsmäßig höchstens 50 beträgt, und (h) die Auswerteeinheit eingerichtet ist zum automatischen Durchführen eines Verfahrens mit den Schritten: (i) für jede relevante Pixellinie Bestimmen einer Position, insbesondere eines Schwerpunkts, des Messobjekts, wobei die Pixellinie eine Zeile oder eine Spalte ist, (ii) Mitteln der so erhaltenen Positionen über $n_{Px}$ Pixellinien, sodass Blockmittel-Lagen erhalten werden, und (iii) Bestimmen der Lage des Objekts aus, insbesondere allen, Blockmittel-Lagen.

Die Messmarke erstreckt sich abschnittsweise entlang einer ersten Linie. Vorzugsweise erstreckt sich die Messmarke zudem abschnittsweise entlang einer zweiten Linie, die quer, insbesondere senkrecht, zur ersten Linie verläuft.

Im Folgenden wird die Erfindung anhand der beigefügten Zeichnungen näher erläutert. Dabei zeigt

Figur 1     eine erfindungsgemäße Vorrichtung in Form eines Autokollimators zum Durchführung eines erfindungsgemäßen Verfahrens,

Figur 2     eine schematische Ansicht des Messobjekts auf dem Detektorelement,

Figur 3a    eine theoretische Berechnung der von verschiedenen Pixeln einer Zeile gemessenen Intensitäten,

Figur 3b    die Abweichung der gemessenen Position von der tatsächlichen Position bei einer Auswertung nach dem Stand der Technik,

Figur 3c    ein Diagramm, bei dem die gemessene Position über der tatsächlichen Position aufgetragen ist, wenn ein erfindungsgemäßes Verfahren zur Auswertung verwendet wird,

Figur 3d    eine Darstellung der Positionsabweichung über der tatsächlichen Position.

Figur 4a    zeigt eine schematische Ansicht einer Vorrichtung zum Ermitteln der Lage eines Objekts,

Figur 4b    zeigt eine Ansicht von oben auf die Vorrichtung gemäß Figur 4a, und

Figur 5     zeigt eine schematische Ansicht eines ersten und eines zweiten Messobjekts auf dem Detektorelement.

Figur 6     zeigt eine weitere schematische Ansicht zur Erläuterung des erfindungsgemäßen Verfahrens.

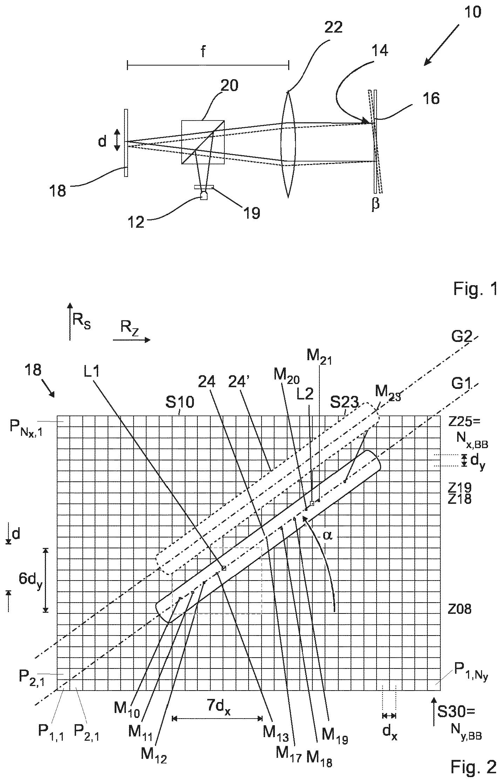

Figur 1 zeigt schematisch eine erfindungsgemäße Vorrichtung zum Mitteln einer Lage eines zumindest abschnittsweise linienförmigen Objekts in Form eines Autokollimators 10 mit einer Lichtquelle 12 zum Erzeugen einer Messmarke 14, die auf einen Spiegel 16 projiziert wird. Der Autokollimator 10 besitzt zudem ein Detektorelement 18 in Form eines CCD-Arrays. Licht von der Lichtquelle 12 durchläuft im vorliegenden Fall zunächst eine Schlitzblende 19 mit einem Schlitz in Form der Messmarke, einen Strahlteiler 20 und danach ein Objektiv 22. Das Objektiv 22 hat eine Brennweite f, die einem Abstand des Detektors 18 vom Objektiv 22 entspricht. Der Autokollimator 10 misst einen Winkel $\beta$ zwischen dem Spiegel 16 und dem Detektorelement 18 anhand einer Verschiebung d eines Bildes der Messmarke 14 auf dem Detektorelement 18.

Figur 2 zeigt schematisch das Detektorelement 18, das aus einer Vielzahl an Pixeln $P_{i,j}$ ($i = 1, 2, ..., N_x$ und $j = 1, 2, ..., N_y$) aufgebaut ist. Schematisch eingezeichnet ist ein Messobjekt 24, dass das Abbild der Messmarke 14 ist. Es ist möglich, dass das Messobjekt 24 - wie im vorliegenden Fall - heller ist als die Umgebung, beispielsweise durch einen hellen Streifen gebildet ist. Umgekehrt ist es aber auch möglich, dass das Messobjekt 24 dunkler ist als die Umgebung und beispielsweise als schwarzer Strich gebildet ist und/oder dass das Messobjekt 24 ein einzelner Übergang von hell nach dunkel ist oder ein Übergang, der graduell ansteigend und wieder abnehmend ist.

Das Detektorelement 18 besitzt $N_x$ Zeilen und $N_y$ Spalten. Die Zeilenrichtung ist die x-Richtung und verläuft nach rechts. Die Spaltenrichtung ist die y-Richtung und verläuft nach oben. Der Zeilenabstand ist als $d_y$ eingezeichnet, der Spaltenabstand als $d_x$. Der Zeilenabstand ist der Abstand der Mittelpunkte von zwei Pixeln gleicher Spalte und benachbarter Zeilen. Der Spaltenabstand ist der Abstand der Mittelpunkte von zwei Pixeln gleicher Zeile aber benachbarter Spalten.

Es ist zu erkennen, dass das Messobjekt 24 unter einem Orientierungswinkel $\alpha$ zum Detektorelement orientiert

$$\alpha = \arctan\left(\frac{n_y d_y}{n_x d_x}\right) \pm \varepsilon$$

ist, für den im vorliegenden Fall $\qquad$ mit $n_x$ = 7 und $n_y$ = 6 sowie $\varepsilon$ = 0 gilt.

Ändert sich der Winkel $\beta$, so verschiebt sich das Messobjekt 24 und wird nun mit dem Bezugszeichen 24', gekennzeichnet. Zwischen diesen beiden Positionen befindet sich die Verschiebung d.

Da $n_x$ = 7 > 6 = $n_y$ gilt, werden als Pixellinien Spalten und $n_{Px}$ = 7 gewählt. Die relevanten Pixellinien sind in diesem Fall die Spalten S10, ..., S24, da das Messobjekt 24 diese Spalten kreuzt. Für jede der relevanten Pixellinien S10, ..., S24 wird der Schwerpunkt M des Messobjekts bestimmt. Es ergeben sich so die Schwerpunkte M10, M11, ..., M24.

In einem nachfolgendem Schritt werden die so erhaltenen Positionen $M_K$ (k = 1, ..., 23) über $n_{Px}$ Pixellinien, im vorliegenden Fall $n_{Px}$ = $n_x$ = 7 Pixellinien, gemittelt, nämlich die Spalten S10 bis S16. Es wird daraus eine Blockmittel-Lage L ermittelt, die die Position des so ermittelten Mittelwerts in Einheiten des Detektorelements 18 angibt. Aus den nächsten $n_{Px}$ = 7 Pixellinien S17 bis S23 wird eine zweite Blockmittel-Lage und L2 berechnet. Um die Darstellung zu vereinfachen werden lediglich die Blockmittel-Lagen L1 und L2 eingezeichnet. Die erste Blockmittel-Lage L1 wurde berechnet als Mittelwert der Schwerpunkte M10 bis M16. Die zweite Blockmittel-Lage L2 wurde berechnet aus den Positionen M17 bis M23.

Es sei darauf hingewiesen, dass das Detektorelement 18 in aller Regel deutlich mehr Pixel aufweist als in Figur 2 gezeigt. Zudem erstreckt sich das Messobjekt 24 über mehr Pixel. Aus diesem Grund existieren mehr Schwerpunkte $M_K$ und damit mehr Blockmittel-Lagen L.

Aus der Gesamtheit der Blockmittel-Lagen $L_K$ (hier: K = 1, 2) wird eine Gerade G1 berechnet. Verändert sich der Winkel $\beta$ (vgl. Figur 1), so verschiebt sich die Gerade G1 um die Verschiebung d, sodass sich die Gerade G2 ergibt. Aus der so bestimmten Verschiebung d wird der Winkel $\beta$ berechnet.

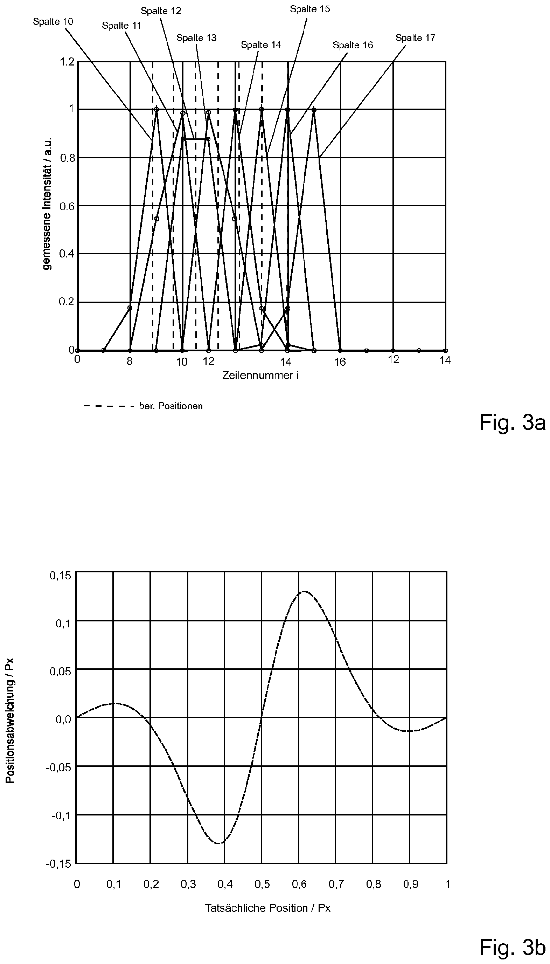

Figur 3a zeigt die Abhängigkeit der gemessenen Intensität I in beliebigen, beispielsweise normierten, Einheiten.

Figur 3b zeigt die daraus berechnete Positionsabweichung in Pixeln über der tatsächlichen Position in Pixeln. Gezeigt ist eine analytische Funktion, die in Anlehnung an die berechneten Positionen aus Fig. 3a willkürlich gewählt wurde, um die Funktionsweise des Verfahrens bildlich darzustellen. Die Funktion simuliert die Differenz zwischen berechneter und tatsächlicher Position des Messobjekts für jede einzelne Spalte. Aufgrund des Pixelrasters des Detektors ist dieser Zusammenhang immer periodisch mit 1 Pixel.

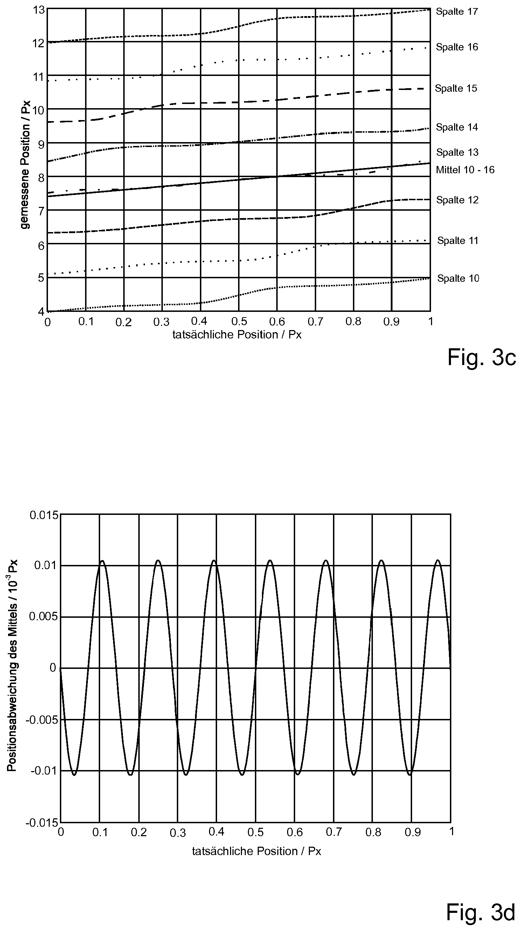

Figur 3c zeigt die gemessenen Positionen in Abhängigkeit von der tatsächlichen Position, wenn das erfindungsgemäße Verfahren angewendet wird.

Figur 3 d zeigt die Positionsabweichung. Es ist zu erkennen, dass diese in Figur 3b gezeigte Positionsabweichung um den Faktor $10^{-3}$ kleiner ist. Positionsabweichungen sind die Abweichungen der berechneten Blockmittel-Lagen von den tatsächlichen Positionen. Hier sind simulierte Ergebnisse gezeigt, die die Funktionsweise des Verfahrens demonstrieren. Der Faktor $10^{-3}$ ist ein reines Simulationsergebnis und kann in realen Bedingungen anders sein. Die Periodizität der Abweichung der Blockmittel-Lagen eignet sich gut für eine quantitative Aussage. Die Periode TBI hängt mit der Anzahl der gemittelten Pixellinien zusammen, im Beispiel ist dies TBI = $1/n_x$ = 1/7 Px.

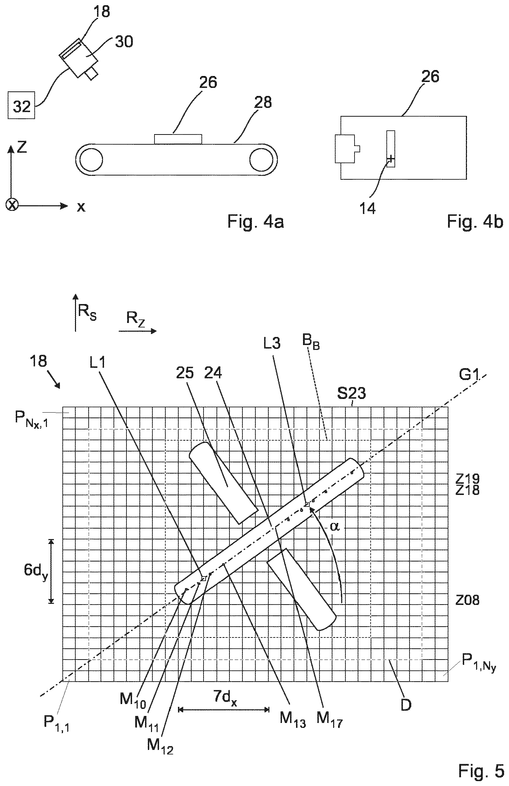

Figur 4a zeigt eine Vorrichtung zum Ermitteln einer Lage eines Objekts 26, bei dem es sich beispielsweise um ein optisches Bauteil oder einen Wafer handeln kann. Dieses Objekt 26 ist auf einer Objektaufnahme 28 in Form einer Förderrichtung angeordnet. Eine Kamera 30, die das Detektorelement 18 umfasst, blickt auf das Objekt 26.

Figur 4b zeigt die Anordnung gemäß Figur 4a in einer Ansicht von oben. Die Lage des Objekts 26 wird wie oben beschrieben ermittelt. Dazu umfasst die Vorrichtung eine Auswerteeinheit 32, die mit dem Detektorelement 18 verbunden ist und automatisch das oben beschriebene Verfahren ausführt, sodass eine Position bezüglich eines vorgegebenen Koordinatensystems des Objekts 26 berechnet wird.

Das Objekt 26 kann eine schematisch eingezeichnete Messmarke 14 aufweisen, das ist aber nicht notwendig, solange das Objekt 26 selbst zumindest abschnittsweise linienförmig ist.

Figur 5 zeigt eine schematische Ansicht eines Bildes auf dem Detektorelement 18, wobei ein zweites Messobjekt 25 vorhanden ist, das sich quer, im vorliegenden Fall senkrecht, zum ersten Messeobjekt 24 erstreckt. Das erste Messobjekt 24 und das zweite Messobjekt 25 bilden gemeinsam ein Messmarkenbild.

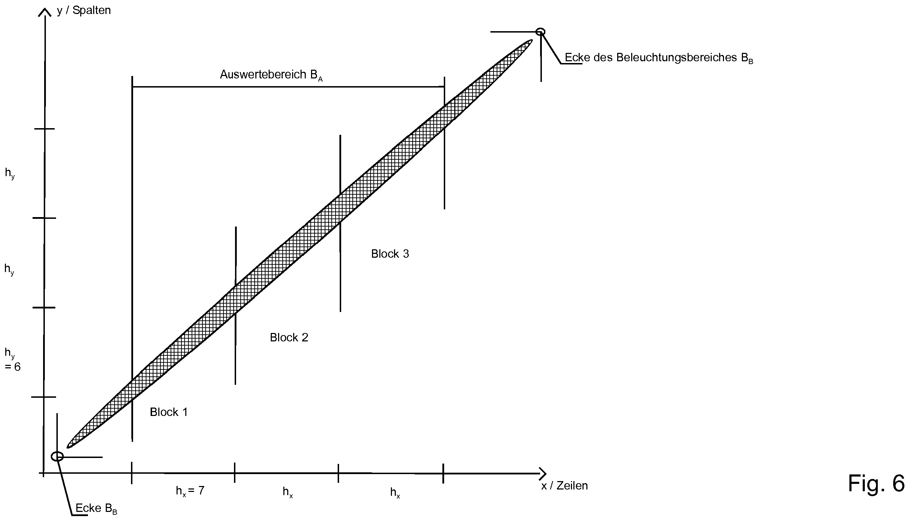

Figur 6 zeigt das Messobjekt 24, das sich innerhalb eines Beleuchtungsbereichs erstreckt. Der Beleuchtungsbereich umschließt das gesamte Messobjekt 24. Die Werte seiner Ausdehnungen $N_{x,BB}$, $N_{y,BB}$ sind nicht relevant und er kann größer sein als der Detektor. In Figur 6 sind die minimalen Ecken des Beleuchtungsbereiches gekennzeichnet. Verändert das Messobjekt 24 seine Lage, kann sich die Lage des Beleuchtungsbereichs verändern. Der Beleuchtungsbereich ist eine obere Grenze für die Wahl der Parameter, denn die Mittelung kann nur über Pixellinien durchgeführt werden, die das Messobjekt enthalten.

Der Auswertebereich $B_A$ ergibt sich aus der Gesamtheit der ausgewählten Blöcke. Ein einzelner Block besteht aus $n_x$ Spalten oder $n_y$ Zeilen. Im Beispiel sind dies genau $n_x$ = 7 Spalten. In Figur 6 sind drei mögliche Blöcke gekennzeichnet. Der Auswertebereich erstreckt sich dann über $N_{BI} \cdot n_x$ = 3 · 7 = 21 Spalten. In y-Richtung muss jeder Block vollständig innerhalb des Beleuchtungsbereichs und des Detektorelements liegen. Ändert das Messobjekt 24 seine Lage, ändert sich auch die Lage des Auswertebereichs, um die genannten Bedingungen immer zu erfüllen. Außerdem können adaptiv beliebige Blöcke von der Auswertung ausgeschlossen werden.

**Bezugszeichenliste**

| | | | |
|---|---|---|---|
| 10 | Autokollimator | M | Schwerpunkt |
| 12 | Lichtquelle | $N_{Bl}$ | Anzahl der Blöcke, über die gemittelt wird |
| 14 | Messmarke | | |
| 16 | Spiegel | $n_{Px}$ | Zahl der Pixellinien pro Block, über die gemittelt wird |
| 18 | Detektorelement | | |
| 19 | Schlitzblende | $N_x$ | Zeilenanzahl |
| | | $N_y$ | Spaltenanzahl |
| 20 | Strahlteiler | | |
| 22 | Objektiv | $P_{i,j}$ | Pixel |
| 24 | Messobjekt | S | Spalte |
| 25 | zweites Messobjekt | Z | Zeile |
| 26 | Objekt | Rs | Spaltenrichtung |
| 28 | Objektaufnahme | Rz | Zeilenrichtung |
| 30 | Kamera | | |
| 32 | Auswerteeinheit | | |
| $\alpha$ | Orientierungswinkel | | |
| $\beta$ | Winkel | | |
| $B_B$ | Beleuchtungsbereich | | |
| d | Verschiebung | | |
| D | Detektionsbereich | | |
| f | Brennweite | | |
| G | Gerade | | |
| i | Laufindex | | |
| j | Laufindex | | |
| k | Laufindex | | |
| L | Blockmittel-Lage | | |

**Patentansprüche**

1. Verfahren zum Ermitteln einer Lage eines zumindest abschnittsweise linienförmigen Objekts (26), mit dem Schritt

(i) Anordnen des Objekts (26), sodass auf einem Detektorelement (18) ein Messobjekt (24) abgebildet wird,
(ii) wobei das Detektorelement (18)

- in $N_x$ Zeilen (Z) und $N_y$ Spalten (S) angeordnete Detektorpixel ($P_i$) aufweist,
- sich die Zeilen (Z) in eine Zeilenrichtung (Rz) erstrecken,
- zwei benachbarte Zeilen (Z) einen Zeilenabstand $d_y$ haben,
- sich die Spalten (S) in eine quer, insbesondere senkrecht, zur Zeilenrichtung (Rz) verlaufende Spaltenrichtung (Rs) erstrecken,
- zwei benachbarte Spalten (S) einen Spaltenabstand $d_x$ haben und
- zumindest so viele Spalten (S) wie Zeilen (Z) existieren, und

(iii) wobei sich das Messobjekt (24) unter einem Orientierungswinkel $\alpha$ relativ zur Zeilenrichtung (Rz) auf dem Detektorelement (18) erstreckt,
**dadurch gekennzeichnet, dass**

(iv) für den Orientierungswinkel $\alpha$ die Formel $\alpha = \arctan\left(\frac{n_y d_y}{n_x d_x}\right) \pm \varepsilon$ gilt, wobei $n_x < N_x$ und $n_y < N_y$ natürliche, teilerfremde Zahlen sind und wobei $\varepsilon < 10$ Bogenminuten gilt und dass das Verfahren die folgenden Schritte umfasst:

(v) für jede relevante Pixellinie (S, Z) Bestimmen einer Position (M), insbesondere eines Schwerpunkts (M), des Messobjekts (24), wobei die Pixellinie eine Zeile oder eine Spalte ist und eine relevante Pixellinie eine Pixellinie ist, die das Messobjekt (24) schneidet,

(vi) Mitteln der so erhaltenen Positionen (M) über $n_{Px}$ Pixellinien, sodass Blockmittel-Lagen (L) erhalten werden und

(vii) Bestimmen der Lage des Messobjekts (24) aus, insbesondere allen, Blockmittel-Lagen (L), wobei

(viii) eine Differenz zwischen $n_x$ und $n_y$ betragsmäßig höchstens 50 beträgt.

2. Verfahren nach Anspruch 1, **dadurch gekennzeichnet, dass**

- eine Differenz zwischen $n_x$ und $n_y$ betragsmäßig höchstens 10 beträgt und/oder
- $n_x$ höchstens $N_x/10$ beträgt und/oder $n_y$ höchstens $N_y/10$ beträgt.

3. Verfahren nach einem der vorstehenden Ansprüche, **dadurch gekennzeichnet, dass** $n_{Px}$ zumindest 5, insbesondere zumindest 20, beträgt.

4. Verfahren nach einem der vorstehenden Ansprüche, **dadurch gekennzeichnet, dass**

- sich das Messobjekt (24) relativ zum Detektorelement (18) bewegt und stets innerhalb eines rechteckigen Detektionsbereichs (D) liegt,
- wobei der Detektionsbereich $N_{x,D}$ Detektionsbereichs-Zeilen und $N_{y,D}$ Detektionsbereich-Spalten hat und
- wobei $n_x$ ein echter Teiler von $N_{x,D}$ und $n_y$ ein Teiler von $N_{y,D}$ ist.

5. Verfahren nach einem der vorstehenden Ansprüche, **dadurch gekennzeichnet, dass**

- die Pixellinien Spalten sind und $n_{Px} = n_x$ ist, wenn $n_x > n_y$ gilt und
- die Pixellinien Zeilen sind und $n_{Px} = n_y$ ist, wenn $n_x < n_y$ gilt.

6. Verfahren nach einem der vorstehenden Ansprüche, **gekennzeichnet durch** die Schritte:

(i) Anordnen eines zweiten Objekts (26), sodass auf dem Detektorelement (18) ein zweites Messobjekt (25) abgebildet wird, das sich quer zum ersten Messobjekt (24.1) erstreckt,

(ii) für jede relevante Pixelquerlinie, die quer zu den Pixellinien verläuft, Bestimmen einer Position (M), insbesondere eines Schwerpunkts (M), des zweiten Messobjekts (24.2),

(iii) Mitteln der so erhaltenen Positionen über $n_{Px,2}$ Pixelquerlinien, sodass Zweitblockmittel-Lagen erhalten werden und

(iv) Bestimmen der Lage des Messobjekts (24) aus, insbesondere allen, Blockmittel-Lagen (L) und, insbesondere allen, Zweitblockmittel-Lagen.

7. Autokollimator mit

(a) einer Lichtquelle (12) zum Erzeugen einer Messmarke (14),
(b) einem Spiegel (16) und
(c) einem Detektorelement (18), das

- in $N_x$ Zeilen (Z) und $N_y$ Spalten (S) angeordnete Detektorpixel ($P_i$) aufweist, wobei $N_x \geq N_y$ gilt,
- wobei sich die Zeilen (Z) in eine Zeilenrichtung (Rz) erstrecken,
- wobei zwei benachbarte Zeilen (Z) einen Zeilenabstand $d_y$ haben,
- wobei sich die Spalten (S) in eine quer, insbesondere senkrecht, zur Zeilenrichtung (Rz) verlaufende Spaltenrichtung (Rs) erstrecken und
- wobei zwei benachbarte Spalten (S) einen Spaltenabstand $d_x$ haben,

(d) wobei die Lichtquelle (12) und der Spiegel (16) so angeordnet sind, dass die Messmarke (14) auf dem Detektorelement (18) als Messobjekt (24) abgebildet wird,

(e) wobei sich das Messobjekt (24) unter einem Orientierungswinkel $\alpha$ relativ zur Zeilenrichtung (Rz) auf dem Detektorelement (18) erstreckt,

(f) einer Auswerteeinheit, die mit dem Detektorelement (18) verbunden ist, **dadurch gekennzeichnet, dass**

$$\alpha = \arctan\left(\frac{n_y d_y}{n_x d_x}\right) \pm \varepsilon$$

(g) für den Orientierungswinkel $\alpha$ die Formel gilt, wobei $n_x < N_x$ und $n_y < N_y$ natürliche teilerfremde Zahlen sind und wobei $\varepsilon$ < 10 Bogenminuten gilt, und

(h) die Auswerteeinheit eingerichtet ist zum automatischen Durchführen eines Verfahrens mit den Schritten:

(i) für jede relevante Pixellinie (S, Z) Bestimmen einer Position (M), insbesondere eines Schwerpunkts (M), des Messobjekts (24), wobei die Pixellinie (S, Z) eine Zeile (Z) oder eine Spalte (S) ist,

(ii) Mitteln der so erhaltenen Positionen über $n_{P_x}$ Pixellinien, sodass Blockmittel-Lagen (L) erhalten werden, und

(iii) Bestimmen der Lage des Messobjekts (24) aus, insbesondere allen, Blockmittel-Lagen (L), wobei eine relevante Pixellinie eine Pixellinie ist, die das Messobjekt (24) schneidet, und eine Differenz zwischen $n_x$ und $n_y$ betragsmäßig höchstens 50 beträgt.

8. Autokollimator nach Anspruch 7, **dadurch gekennzeichnet, dass**

(a) die Messmarke (14) sich abschnittsweise entlang einer ersten Linie erstreckt und sich abschnittsweise entlang einer zweiten Linie erstreckt, die quer, insbesondere senkrecht, zur ersten Linie verläuft und

(b) die Auswerteeinheit (32) eingerichtet ist zum automatischen Durchführen eines Verfahrens mit den Schritten

(i) für jede relevante Pixelquerlinie, die quer zu den Pixellinien verläuft, Bestimmen einer Position (M), insbesondere eines Schwerpunkts (M), des zweiten Messobjekts (24.2),

(ii) Mitteln der so erhaltenen Positionen über $n_{P_{x,2}}$ Pixelquerlinien, sodass Zweitblockmittel-Lagen erhalten werden und

(iii) Bestimmen der Lage des Messobjekts (24) aus, insbesondere allen, Blockmittel-Lagen (L) und, insbesondere allen, Zweitblockmittel-Lagen.

## Claims

1. A method for determining a position of an at least partially line-shaped object (26) comprising the step

(i) arranging the object (26) so that a measurement object (24) is displayed on the detector element (18).

(ii) wherein the detector element (18)

- comprises detector pixels ($P_i$) arranged in $N_x$ rows (Z) and $N_y$ columns (S),
- the rows (Z) extend in a row direction (Rz),
- two adjacent rows (Z) have a row distance $d_y$,
- the columns (S) extend in a column direction (Rs) that extends transversely, especially perpendicular, to the row direction (Rz),
- two adjacent columns (S) have a column distance $d_x$ and
- there are at least as many columns (S) as rows (Z), and

(iii) wherein the measurement object (24) extends at an orientation angle $\alpha$ relative to the row direction (Rz) on the detector element (18),

**characterised in that**

$$\alpha = \arctan\left(\frac{n_y d_y}{n_x d_x}\right) \pm \varepsilon$$

(iv) for the orientation angle $\alpha$ the formula applies, wherein $n_x < N_x$ and $n_y < N_y$ are natural, co-prime numbers, and wherein $\varepsilon$ < 10 arc minutes applies, and **in that** the method comprises the following steps:

(v) for each relevant pixel line (S, Z), determining a position (M), particularly a centre of gravity (M), of the measurement object (24), the pixel line being a row or a column and a relevant pixel line being a pixel line that intersects the measurement object (24),

(vi) averaging the positions (M) obtained in this way across $n_{Px}$ pixel lines, thereby obtaining block average positions (L) and

(vii) determining the position of the measurement object (24) from block average positions (L), in particular from all said positions, wherein

(viii) the absolute value of a difference between $n_x$ and $n_y$ is at most 50.

2. The method according to claim 1, **characterised in that**

- a difference between $n_x$ and $n_y$ is at most 10 and/or
- $n_x$ is at most $N_x/10$ and/or $n_y$ is at most $N_y/10$.

3. The method according to one of the preceding claims, **characterised in that** $N_{PX}$ is at least 5, in particular at least 20.

4. The method according to one of the preceding claims, **characterised in that**

- the measurement object (24) moves relative to the detector element (18) and always lies within a rectangular detection area (D),
- wherein the detection area has $N_{x,D}$ detection area rows and $N_{y,D}$ detection area columns, and
- wherein $n_x$ is a true factor of $N_{x,D}$ and $n_y$ is a factor of $N_{y,D}$.

5. The method according to one of the preceding claims, **characterised in that**

- the pixel lines are columns and $np_x = n_x$ when $n_x > n_y$ and
- the pixel lines are rows and $n_{Px} = n_x$ when $n_x < n_y$.

6. The method according to one of the preceding claims, **characterised by** the steps:

(i) arranging a second object (26), so that a second measurement object (25) is displayed on the detector element (18), said second measurement object extending transversely to the first measurement object (24.1),

(ii) for each relevant pixel cross line that extends transversely to the pixel lines, determining a position (M), particularly a centre of gravity (M), of the second measurement object (24.2),

(iii) averaging the positions obtained in this way across $n_{Px,2}$ pixel cross lines, thereby obtaining second block average positions and

(iv) determining the position of the measurement object (24) from block average positions (L), in particular from all said positions and second block average positions, in particular from all said positions.

7. An autocollimator with

(a) a light source (12) for generating a measuring mark (14),
(b) a mirror (16) and
(c) a detector element (18) which

- comprises detector pixels ($P_i$) arranged in $N_x$ rows (Z) and $N_y$ columns (S), wherein $N_x \geq N_y$ applies,
- wherein the rows (Z) extend in a row direction (Rz),
- wherein two adjacent rows (Z) have a row distance $d_y$,
- wherein the columns (S) extend in a column direction (Rs) that extends transversely, especially perpendicular, to the row direction (Rz), and
- wherein two adjacent columns (S) have a column distance $d_x$,

(d) wherein the light source (12) and the mirror (16) are arranged in such a way that the measuring mark (14) is displayed on the detector element (18) as a measurement object (24),

(e) wherein the measurement object (24) extends at an orientation angle $\alpha$ relative to the row direction (Rz) on the detector element (18),

(f) an evaluation unit that is connected to the detector element (18), **characterised in that**

$$\alpha = \arctan\left(\frac{n_y d_y}{n_x d_x}\right) \pm \varepsilon$$

(g) for the orientation angle ($\alpha$) the formula                                        applies, wherein $n_x < N_x$ and $n_y < N_y$

are natural, co-prime numbers, and wherein $\varepsilon$ < 10 arc minutes applies, and

(h) the evaluation unit is configured to automatically carry out a method comprising the steps:

(i) for each relevant pixel line (S, Z), determining a position (M), particularly a centre of gravity (M), of the measurement object (24), the pixel line (S, Z) being a row (Z) or a column (S),
(ii) averaging the positions obtained in this way across $n_{Px}$ pixel lines, thereby obtaining block average positions (L) and
(iii) determining the position of the measurement object (24) from block average positions (L), in particular from all said positions, wherein a relevant pixel line is a pixel line that intersects the measurement object (24) and an absolute value of a difference between $n_x$ and $n_y$ is at most 50.

**8.** The autocollimator according to claim 7, **characterised in that**

(a) the measuring mark (14) extends in sections along a first line and extends in sections along a second line that extends transversely, especially perpendicular, to the first line, and
(b) the evaluation unit (32) is configured to automatically carry out a method comprising the steps

(i) for each relevant pixel cross line that extends transversely to the pixel lines, determining a position (M), particularly a centre of gravity (M), of the second measurement object (24.2),
(ii) averaging the positions obtained in this way across $n_{Px,2}$ pixel cross lines, thereby obtaining second block average positions and
(iii) determining the position of the measurement object (24) from block average positions (L), in particular from all said positions and second block average positions, in particular from all said positions.

## Revendications

**1.** Procédé pour déterminer une position relative d'un objet (26) au moins localement linéaire, comprenant l'étape consistant à

(i) disposer l'objet (26) de manière à reproduire un objet à mesurer (24) sur un élément détecteur (18),
(ii) l'élément détecteur (18)

- présentant des pixels de détection ($P_i$) disposés en $N_x$ lignes (Z) et en $N_y$ colonnes (S),
- les lignes (Z) s'étendant dans une direction de ligne ($R_z$),
- deux lignes (Z) voisines ayant un espacement entre lignes $d_y$,
- les colonnes (S) s'étendant dans une direction de colonne ($R_s$) transversale, en particulier perpendiculaire, à la direction de ligne ($R_z$),
- deux colonnes (S) voisines ayant un espacement entre colonnes $d_x$, et
- il existe au moins autant de colonnes (S) que de lignes (Z), et

(iii) l'objet à mesurer (24) s'étendant sur l'élément détecteur (18) selon un angle d'orientation $\alpha$ par rapport à la direction de ligne ($R_z$), **caractérisé en ce que**
(iv) à l'angle d'orientation $\alpha$ s'applique la formule

$$\alpha = \arctan\left(\frac{n_y d_y}{n_x d_x}\right) \pm \varepsilon$$

où $n_x < N_x$ et $n_y < N_y$ sont des nombres naturels premiers entre eux, et
où $\varepsilon$ < 10 minutes d'arc, et **en ce que** le procédé comprend les étapes suivantes consistant à :

(v) pour chaque ligne de pixels pertinente (S, Z), déterminer une position (M), en particulier un centre de gravité (M), de l'objet à mesurer (24), la ligne de pixels étant une ligne ou une colonne, et une ligne de pixels pertinente étant une ligne de pixels qui coupe l'objet à mesurer (24),
(vi) calculer la moyenne des positions (M) ainsi obtenues sur $n_{Px}$ lignes de pixels, de manière à obtenir des positions relatives moyennes de bloc (L), et
(vii) déterminer la position relative de l'objet à mesurer (24) à partir, en particulier, de toutes les positions relatives moyennes de bloc (L),
(viii) une différence entre $n_x$ et $n_y$ étant au maximum de 50 en valeur absolue.

2. Procédé selon la revendication 1, **caractérisé en ce que**

- une différence entre $n_x$ et $n_y$ est au maximum de 10 en valeur absolue, et/ou
- $n_x$ est au maximum égal à $N_x/10$, et/ou $n_y$ est au maximum égal à $N_y/10$.

3. Procédé selon l'une des revendications précédentes, **caractérisé en ce que** $n_{Px}$ est au moins égal à 5, en particulier au moins égal à 20.

4. Procédé selon l'une des revendications précédentes, **caractérisé en ce que**

- l'objet à mesurer (24) se déplace par rapport à l'élément détecteur (18) et se trouve toujours à l'intérieur d'une zone de détection rectangulaire (D),
- la zone de détection ayant $N_{x,D}$ lignes de zone de détection et $N_{y,D}$ colonnes de zone de détection, et
- $n_x$ est un vrai diviseur de $N_{x,D}$ et $n_y$ est un diviseur de $N_{y,D}$.

5. Procédé selon l'une des revendications précédentes, **caractérisé en ce que**

- les lignes de pixels sont des colonnes et $n_{Px} = n_x$ si $n_x > n_y$, et
- les lignes de pixels sont des lignes et $n_{Px} = n_y$ si $n_x < n_y$.

6. Procédé selon l'une des revendications précédentes, **caractérisé par** les étapes consistant à :

(i) disposer un second objet (26) de manière à reproduire, sur l'élément détecteur (18), un second objet à mesurer (25) qui s'étend transversalement au premier objet à mesurer (24.1),
(ii) pour chaque ligne de pixels transversale pertinente qui s'étend transversalement aux lignes de pixels, déterminer une position (M), en particulier un centre de gravité (M), du second objet à mesurer (24.2),
(iii) calculer la moyenne des positions ainsi obtenues sur $n_{Px,2}$ lignes de pixels transversales, de manière à obtenir des positions relatives moyennes de second bloc, et
(iv) déterminer la position relative de l'objet à mesurer (24) à partir, en particulier, de toutes les positions relatives moyennes de bloc (L) et, en particulier, de toutes les positions relatives moyennes de second bloc.

7. Autocollimateur comprenant

(a) une source de lumière (12) pour produire un repère de mesure (14),
(b) un miroir (16) et
(c) un élément détecteur (18)

- présentant des pixels de détection ($P_i$) disposés en $N_x$ lignes (Z) et en $N_y$ colonnes (S), où $N_x \geq N_y$,
- les lignes (Z) s'étendant dans une direction de ligne ($R_z$),
- deux lignes (Z) voisines ayant un espacement entre lignes $d_y$,
- les colonnes (S) s'étendant dans une direction de colonne ($R_s$) transversale, en particulier perpendiculaire, à la direction de ligne ($R_z$), et
- deux colonnes (S) voisines ayant un espacement entre colonnes $d_x$,

(d) la source lumineuse (12) et le miroir (16) étant disposés de telle sorte que le repère de mesure (14) est reproduit sur l'élément détecteur (18) en tant qu'objet à mesurer (24),
(e) l'objet à mesurer (24) s'étendant sur l'élément détecteur (18) selon un angle d'orientation $\alpha$ par rapport à la direction de ligne (Rz),
(f) une unité d'évaluation qui est reliée à l'élément détecteur (18), **caractérisé en ce que**
(g) à l'angle d'orientation $\alpha$ s'applique la formule

$$\alpha = \arctan\left(\frac{n_y d_y}{n_x d_x}\right) \pm \varepsilon$$

où $n_x < N_x$ et $n_y < N_y$ sont des nombres naturels premiers entre eux, et
où $\varepsilon$ < 10 minutes d'arc, et

(h) l'unité d'évaluation est conçue pour automatiquement mettre en oeuvre un procédé comprenant les étapes consistant à :

(i) pour chaque ligne de pixels pertinente (S, Z), déterminer une position (M), en particulier un centre de gravité (M), de l'objet à mesurer (24), la ligne de pixels (S, Z) étant une ligne (Z) ou une colonne (S),
(ii) calculer la moyenne des positions ainsi obtenues sur $n_{Px}$ lignes de pixels, de manière à obtenir des positions relatives moyennes de bloc (L), et
(iii) déterminer la position relative de l'objet à mesurer (24) à partir, en particulier, de toutes les positions relatives moyennes de bloc (L), une ligne de pixels pertinente étant une ligne de pixels qui coupe l'objet à mesurer (24), et une différence entre $n_x$ et $n_y$ étant au maximum de 50 en valeur absolue.

8. Autocollimateur selon la revendication 7, **caractérisé en ce que**

(a) le repère de mesure (14) s'étend localement le long d'une première ligne et s'étend localement le long d'une seconde ligne qui est transversale, en particulier perpendiculaire, à la première ligne, et
(b) l'unité d'évaluation (32) est conçue pour automatiquement mettre en oeuvre un procédé comprenant les étapes consistant à

(i) pour chaque ligne de pixels transversale pertinente qui s'étend transversalement aux lignes de pixels, déterminer une position (M), en particulier un centre de gravité (M), du second objet à mesurer (24.2),
(ii) calculer la moyenne des positions ainsi obtenues sur $n_{Px,2}$ lignes de pixels transversales, de manière à obtenir des positions relatives moyennes de second bloc, et
(iii) déterminer la position relative de l'objet à mesurer (24) à partir de, en particulier, toutes les positions relatives moyennes de bloc (L) et, en particulier, toutes les positions relatives moyennes de second bloc.

Fig. 1

Fig. 2

Fig. 3a

Fig. 3b

Fig. 3c

Fig. 3d

Fig. 4a

Fig. 4b

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003166815 A

**In der Beschreibung aufgeführte Nicht-Patentliteratur**

- **BERGUES et al.** *External visual interface for a Nikon 6D autocollimator*